# EUROPÄISCHE PATENTANMELDUNG

(11) **EP 0 650 884 A1**
(43) Veröffentlichungstag der Anmeldung: **03.05.1995**
(21) Anmeldenummer: 94114853.8
(22) Anmeldetag: 21.09.1994
(51) Int. Cl.: B62D 61/12

(54) **Nutzfahrzeug, insbesondere luftgefederter Frontlenker-Lastkraftwagen, mit einer einer Hinterachse zugeordneten Vor- bzw. Nachlaufachse**

(30) Priorität: 03.11.1993 AT 2212/93
(71) Anmelder: STEYR NUTZFAHRZEUGE AG, A-4400 Steyr (AT)
(72) Erfinder: Steyrl, Hans, A-4400 Steyr (AT)

(57) **Zusammenfassung**

Die Erfindung betrifft ein Nutzfahrzeug, insbesondere luftgefederten Frontlenker-Lastkraftwagen, mit einer einer Hinterachse (6) zugeordneten Vor- bzw. Nachlaufachse (9 bzw. 10), die durch eine hydraulische oder pneumatische Lifteinrichtung in eine Absenkposition, in der die Räder (11 bzw. 12) in Fahrbahnkontakt sind, oder in eine Liftstellung, in der die Räder (11 bzw. 12) außer Fahrbahnkontakt sind, überführbar ist, dadurch gekennzeichnet, daß die Räder (11 bzw. 12) der Vor- bzw. Nachlaufachse (9 bzw. 10) einen erheblich kleineren Reifen-Außendurchmesser haben als die Räder (8) der benachbarten Hinterachse (6).

Um die Ladefläche bzw. unterste Ebene (13) des Fahrzeug-Aufbaus (4) soweit wie möglich absenken zu können, trotzdem aber ein hinreichend großes Liften der Vor- bzw. Nachlaufachse (9 bzw. 10) sicherzustellen, wird erfindungsgemäß vorgeschlagen, die Räder (11 bzw. 12) der Vor- bzw. Nachlaufachse (9 bzw. 10) mit Reifen zu bestücken, die einen erheblich kleineren Außendurchmesser haben als jene der Räder (8) der benachbarten Hinterachse (6).

Diese Reifendurchmesserreduzierung erbringt eine Reihe von funktionalen und auch fertigungstechnischen Vorteilen im Fahrzeug.

## Beschreibung

Die Erfindung betrifft ein Nutzfahrzeug, insbesondere luftgefederten Frontlenker-Lastkraftwagen, mit einer einer Hinterachse zugeordneten Nach- bzw. Vorlaufachse, die durch eine hydraulische oder pneumatische Lifteinrichtung in eine Absenkposition, in der die Räder in Fahrbahnkontakt sind, oder in eine Liftstellung, in der die Räder außer Fahrbahnkontakt sind, überführbar ist.

Bei bekannten Nutzfahrzeugen haben die Räder aller Achsen, so auch der vorhandenen Vor- oder Nachlaufachse Reifen mit gleichem Außendurchmesser. Aufgrund der diesbezüglichen Reifengröße an der Vor- oder Nachlaufachse bestimmt sich in Verbindung mit dem maximalen Hubweg der Lifteinrichtung der minimalst mögliche Abstand zwischen Ladefläche und Fahrbahn. Dabei ist zu berücksichtigen, daß auch bei gelifteter Vor- oder Nachlaufachse noch ein gewisser Freiraum zwischen deren Rädern und Ladeplattform-Unterkante verbleiben muß.

Vielfach wird jedoch der Wunsch geäußert, den verfügbaren Laderaum des Nutzfahrzeuges zu vergrößern. Dabei sind diesem Wunsch wegen der gesetzgeberischen Vorschriften hinsichtlich effektiver Breite, Höhe und Länge entsprechende Grenzen gesetzt, eine Vergrößerung des Laderaumes wäre nur durch Absenkung der Ladefläche gegenüber der Fahrbahn möglich. Bislang hat man dies dadurch erreicht, daß man das Fahrzeug rundum mit Rädern mit einer im Außendurchmesser kleineren Bereifung verwendet hat. Mit dieser Reifendurchmesseränderung ergaben sich jedoch Probleme im Bereich der liftbaren Vor- oder Nachlaufachse, da diese Reifendurchmesserverkleinerung mit einer wesentlichen Verringerung des verfügbaren Hubweges der Lifteinrichtung und einer wesentlichen Verkleinerung des Abstandes zwischen Reifenunterkante und Fahrbahn in gelifteter Stellung führte. Letzteres wiederum führte bei topographisch ungünstigen Fahrbahnverhältnissen, z. B. beim Durchfahren von Schlaglöchern oder kleinen Senken oder beim Überfahren von Bodenwellen dazu, daß die Räder der Vor- oder Nachlaufachse, auch wenn in Liftstellung befindlich, in Fahrbahnkontakt kamen, was zu Beschädigungen führen konnte.

Es ist daher Aufgabe der Erfindung, bei einem Nutzfahrzeug der eingangs genannten Art solche Vorkehrungen zu treffen, die es erlauben, die Ladefläche zwecks Vergrößerung des Ladevolumens abzusenken, trotzdem aber die vorstehend geschilderten Nachteile im Bereich der Vor- oder Nachlaufachse vermeiden.

Diese Aufgabe ist erfindungsgemäß dadurch gelöst, daß die Räder der Vor- bzw. Nachlaufachse einen erheblich kleineren Reifenaußendurchmesser haben als die Räder der benachbarten Hinterachse.

Dies bedeutet, die Räder an Vorderachse und Hinterachse des Nutzfahrzeuges haben alle den gleichen Reifenaußendurchmesser, nur die Reifen der Räder der Vor- bzw. Nachlaufachse sind im Durchmesser stark reduziert, vorzugsweise auf ein Maß, das dem 0,7- bis 0,9-fachen des Reifenaußendurchmessers der übrigen Räder des Fahrzeuges entspricht. Auf diese Weise ist es möglich, die Ladefläche soweit als möglich der Oberkante der Reifen der Hinterachse zwecks Absenkung anzunähern. Aufgrund des nunmehr kleineren Reifenaußendurchmessers der Räder der Vor- bzw. Nachlaufachse steht dann aber trotzdem genügend Raum nach oben zur Überführung derselben in Liftposition zur Verfügung, was im Umkehrschluß in Liftstellung auch einen genügend großen Abstand der Räderunterkanten der Vor- bzw. Nachlaufachse zur Fahrbahn in Liftposition bedeutet. Das heißt, aufgrund der erfindungsgemäßen Lösung sind jene Probleme vermeidbar, wie eingangs anhand des Standes der Technik geschildert. Der aufgrund der Reifendurchmesserreduzierung verbleibende Freiraum zwischen den Rädern der in Liftposition befindlichen Vor- bzw. Nachlaufachse und der Fahrbahn stellt sicher, daß die betreffenden Räder auch beim Durchfahren von Schlaglöchern oder Senken oder beim Überfahren von Bodenwellen nicht in Fahrbahnkontakt kommen. Als positiver Nebeneffekt ergibt sich bei einer Vorlaufachse durch die nunmehr tiefere Anordnung des Achskörpers eine Verbesserung der Platzverhältnisse zwischen geliftetem Achskörper und der zur benachbarten, angetriebenen Hinterachse führenden Gelenkwelle. Dieser größere Freiweg kann entweder für einen größeren Liftweg der Vorlaufachse oder eine flexiblere Anordnung des Gelenkwellenstranges genutzt werden. Bei einer Nachlaufachse ergibt sich aufgrund der erfindungsgemäßen Lösung der Vorteil, daß ebenfalls durch die tiefere Anordnung des Achskörpers der Freiraum zum Fahrgestellrahmen für das Litten der Achse verbessert wird bzw. mehr Freiheiten für die Rahmendimensionierung hinsichtlich der Profilhöhe bestehen.

Nachdem die Vor- bzw. Nachlaufachse zeitweise, zumindest bei Leerfahrten geliftet ist, bleibt die Verwendung einer durchmesserkleineren Bereifung an dieser auch bezüglich Reifenverschleiß von untergeordneter Bedeutung. Bedingt durch den kleineren Reifendurchmesser an der Vor- bzw. Nachlaufachse ist für die erforderliche Tragfähigkeit diese gegebenenfalls durch eine größere Reifenbreite und/oder die Verwendung von Reifen aus entsprechend abriebfesterem Gummi-Material entsprechend einzustellen.

Nachstehend ist die Erfindung anhand zweier in der Zeichnung dargestellter Ausführungsbeispiele noch näher erläutert. In der Zeichnung zeigen:
- Fig. 1: weitgehend schematisiert in Seitenansicht einen Frontlenker-Lastkraftwagen mit erfindungsgemäßer Vorlaufachse in Absenkposition,
- Fig. 2: das Fahrzeug gemäß Fig. 1 mit in Liftposition befindlicher Vorlaufachse,
- Fig. 3: schematisch in Seitenansicht einen Frontlenker-Lastkraftwagen mit erfindungsgemäßer Nachlaufachse in Absenkposition, und
- Fig.4: das Fahrzeug gemäß Fig. 3 mit in Liftposition befindlicher Nachlaufachse.

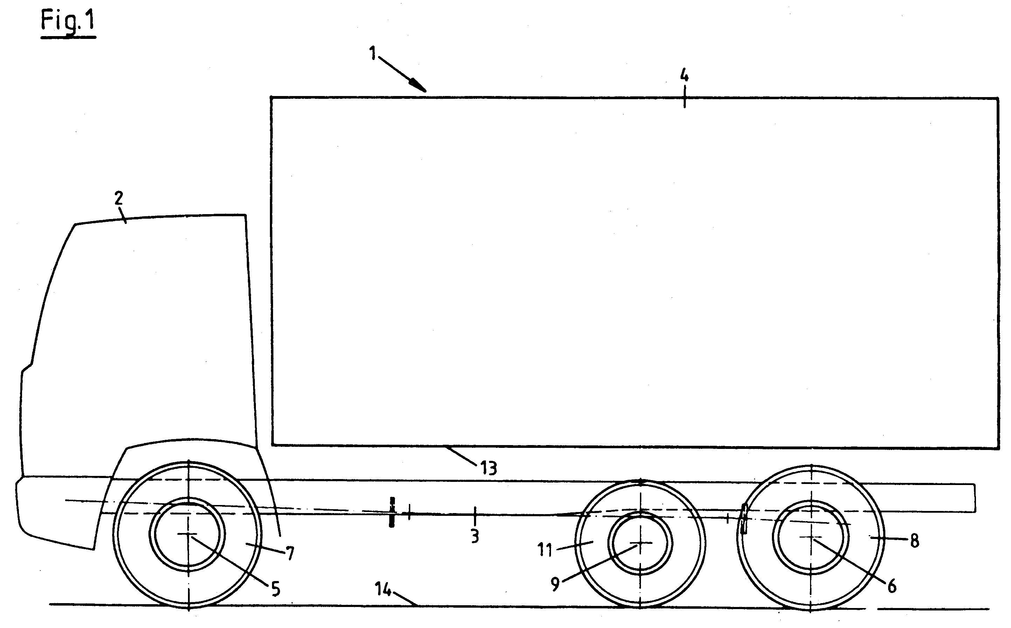

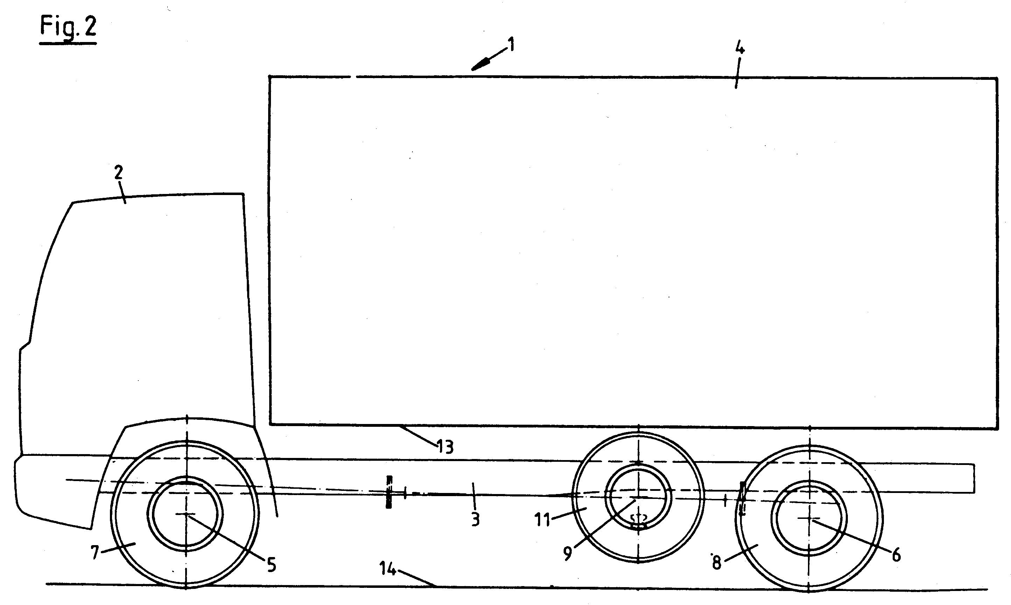

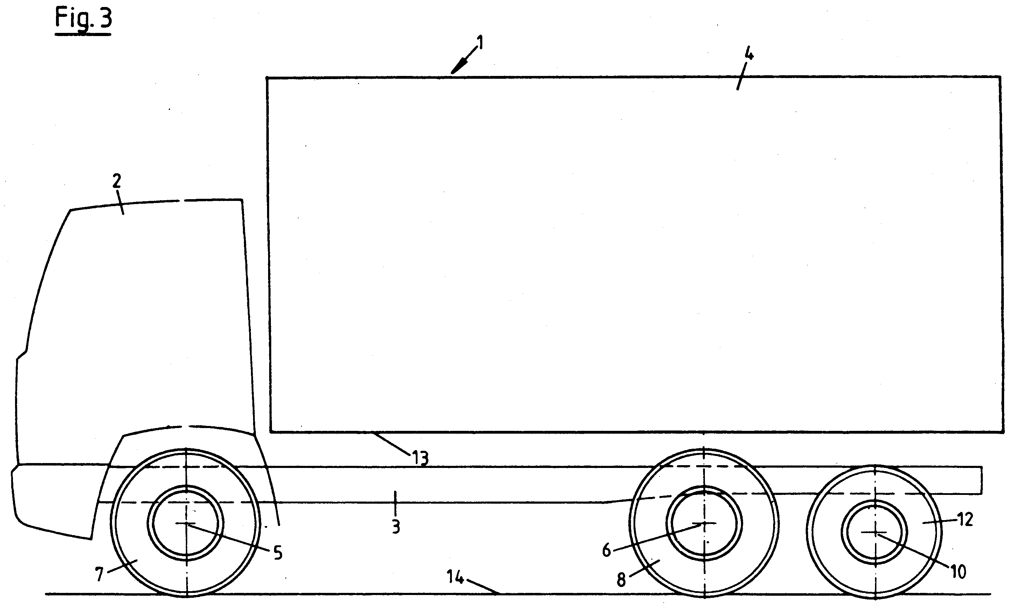

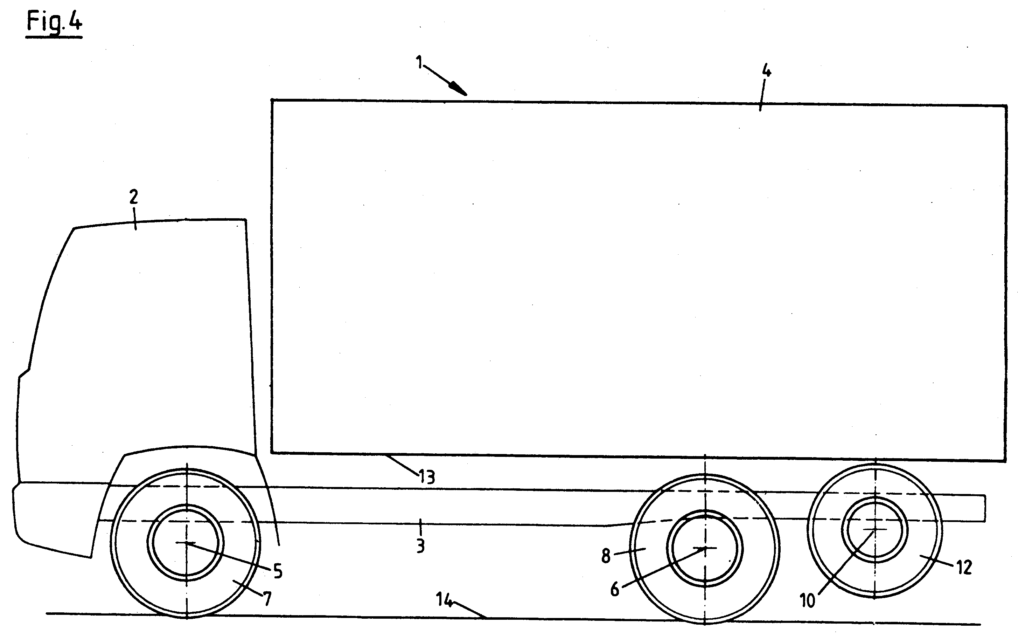

In den Figuren der Zeichnung ist mit 1 ein Nutzfahrzeug, hier ein luftgefederter Frontlenker-Lastkraftwagen, mit 2 dessen Fahrerhaus, mit 3 der Fahrzeugrahmen, mit 4 der Aufbau, mit 5 eine Vorderachse und mit 6 eine Hinterachse bezeichnet. Die Räder 7 der Vorderachse 5 und Räder 8 der Hinterachse 6 haben alle eine Bereifung mit gleich großem Reifenaußendurchmesser. Im Fall des Fahrzeugs gemäß Fig. 1 und 2 ist dessen Hinterachse 6 eine Vorlaufachse 9 zugeordnet, im Fall des Fahrzeugs gemäß Fig. 3 und 4 dagegen ist der Hinterachse 6 eine Nachlaufachse 10 zugeordnet. Sowohl der Vorlaufachse 9 als auch der Nachlaufachse 10 ist am Fahrzeug eine (nicht dargestellte) hydraulische oder pneumatische Lifteinrichtung zugeordnet, mit der die Vor- bzw. Nachlaufachse 9 bzw. 10 in eine Absenkposition bringbar und haltbar sowie aus dieser in eine Liftposition bringbar und haltbar ist. In Absenkstellung der Vor- bzw. Nachlaufachse 9 bzw. 10 (siehe Fig. 1 und 3) sind deren Räder 11 bzw. 12 in Fahrbahnkontakt gehalten. In Liftposition dagegen befinden sich die Räder 11 bzw. 12 der angehobenen Vor- bzw. Nachlaufachse 9 bzw. 10 außer Fahrbahnkontakt (siehe Fig. 2 und 4).

Entsprechend der Erfindung haben die Räder 11 bzw. 12 der Vor- bzw. Nachlaufachse 9 bzw. 10 einen erheblich kleineren Reifen-Außendurchmesser als die Räder 8 der benachbarten Hinterachse 6. Vorzugsweise haben die Reifen an den Rädern 11 bzw. 12 der Vor- bzw. Nachlaufachse 9 bzw. 10 einen Durchmesser, der dem 0,7- bis 0,9-fachen des Reifen-Außendurchmessers der Räder 8 der benachbarten Hinterachse 6 entspricht. Auf diese Weise kann die Ladefläche bzw. unterste Ebene 13 des Aufbaus 4 soweit als möglich zur Bereifung 8 der Hinterachse 6 hin abgesenkt werden, trotzdem steht aber wegen der Durchmesserverkleinerung der Bereifung 11 bzw. 12 der Vor- bzw. Nachlaufachse 9 bzw. 10 genügend Distanz zwischen Fahrbahn 14 und Ladefläche bzw. unterster Ebene 13 für ein ausreichend großes Anheben der Vor- bzw. Nachlaufachse 9 bzw. 10 in Liftposition zur Verfügung, was aus Fig. 2 und 4 deutlich hervorgeht. In Liftposition der Vor- bzw. Nachlaufachse 9 bzw. 10 ist der Abstand deren Räder 11 bzw. 12 jedenfalls so groß, daß auch beim Durchfahren von Schlaglöchern oder Senken oder beim Überfahren von Bodenwellen kein Kontakt mit der Fahrbahn 14 zustande kommt. Um trotz der Durchmesserreduzierung der Bereifung 11 bzw. 12 der Vor- bzw. Nachlaufachse 9 bzw. 10 eine entsprechende Tragfähigkeit derselben sicherzustellen sowie der an sich größeren Reifenabnutzung Rechnung zu tragen, ist ein entsprechender Reifentyp aus geeignetem Material und geeigneter Profilierung festzulegen. Dazu können die Reifen der Räder 11 bzw. 12 der Vor- bzw. Nachlaufachse 9 bzw. 10 entweder die gleiche Breite haben wie die Reifen der Räder 8 der benachbarten Hinterachse, diesen gegenüber aber aus abriebfesterem Gummi-Material und gegebenenfalls einer anderen Profilierung bestehen. Alternativ hierzu können die Reifen der Räger 11 bzw. 12 der Vor- bzw. Nachlaufachse 9 bzw. 10 jedoch auch eine größere Breite haben als die Reifen der Räder 8 der benachbarten Hinterachse und dann entweder aus gleichem Material wie jene der letzteren oder einem anderen, abriebfesterem Material mit gegebenenfalls anderer Profilierung hergestellt sein.

## Patentansprüche

1. Nutzfahrzeug, insbesondere luftgefederter Frontlenker-Lastkraftwagen, mit einer einer Hinterachse (6) zugeordneten Vor- bzw. Nachlaufachse (9 bzw. 10), die durch eine hydraulische oder pneumatische Lifteinrichtung in eine Absenkposition, in der die Räder (11 bzw. 12) in Fahrbahnkontakt sind, oder in eine Liftstellung, in der die Räder (11 bzw. 12) außer Fahrbahnkontakt sind, überführbar ist, dadurch gekennzeichnet, daß die Räder (11 bzw. 12) der Vor- bzw. Nachlaufachse (9 bzw. 10) einen erheblich kleineren Reifen-Außendurchmesser haben als die Räder (8) der benachbarten Hinterachse (6).

2. Nutzfahrzeug nach Anspruch 1, dadurch gekennzeichnet, daß die Räder (11 bzw. 12) der Vor- bzw. Nachlaufachse (9 bzw. 10) einen Reifen-Außendurchmesser haben, der dem 0,7- bis 0,9-fachen des Reifen-Außendurchmessers der Räder (8) der benachbarten Hinterachse (6) entspricht.

3. Nutzfahrzeug nach einem der vorhergehenden Ansprüche, dadurch gekennzeichnet, daß die Reifen der Räder (11 bzw. 12) der Vor- bzw. Nachlaufachse (9 bzw. 10) die gleiche Breite wie der Reifen der Räder (8) der benachbarten Hinterachse haben, diesen gegenüber aber aus abriebfesterem Gummi-Material bestehen und gegebenenfalls auch ein anderes Profil haben.

4. Nutzfahrzeug nach einem der Ansprüche 1 und 2, dadurch gekennzeichnet, daß die Reifen der Räder (11 bzw. 12) der Vor- bzw. Nachlaufachse (9 bzw. 11) eine größere Breite als die Reifen der Räder (8) der benachbarten Hinterachse (6) haben und aus gleichem oder abriebfesterem Material hergestellt sind und gleiches oder anderes Profil wie letztere (8) haben.
